# EUROPÄISCHE PATENTSCHRIFT

(11) **EP 1 027 922 B1**
(45) Veröffentlichungstag und Bekanntmachung des Hinweises auf die Patenterteilung: **22.06.2005**
(21) Anmeldenummer: 00101477.8
(22) Anmeldetag: 26.01.2000
(51) Int. Cl.: B01J 8/02, C01B 17/04, F28D 7/06

(54) **Reaktor zur Durchführung einer katalytischen, exothermen Reaktion an Substanzen, die in einer Gasströmung enthalten sind**
Reactor for catalytic exothermic reactions of substances in a gas flow
Réacteur pour de réactions catalytiques exothermiques de substances en phase gazeuse

(30) Priorität: 10.02.1999 DE 19905429
(43) Veröffentlichungstag der Anmeldung: 16.08.2000
(73) Patentinhaber: Marold, Freimut Joachim, 71093 Weil im Schönbuch (DE)
(72) Erfinder: Marold, Freimut Joachim, 71093 Weil im Schönbuch (DE)
(74) Vertreter: Best, Michael, Dr.

(56) Entgegenhaltungen:
- DE-A- 3 007 203
- DE-A- 3 708 957
- US-A- 2 148 545
- US-A- 2 281 527
- US-A- 4 420 462
- PATENT ABSTRACTS OF JAPAN vol. 009, no. 247 (C-307), 3. Oktober 1985 (1985-10-03) -& JP 60 102929 A (MITSUBISHI JUKOGYO KK), 7. Juni 1985 (1985-06-07)
- PATENT ABSTRACTS OF JAPAN vol. 018, no. 588 (C-1271), 10. November 1994 (1994-11-10) -& JP 06 218269 A (MITSUBISHI GAS CHEM CO INC), 9. August 1994 (1994-08-09)

## Beschreibung

Die Erfindung betrifft einen Reaktor zur Durchführung einer katalytischen mit einer Wärmetönung verbundenen Reaktion an Substanzen, die in einer Gasströmung enthalten sind, mit
a) einem Gehäuse, das einen Einlaß und einen Auslaß für die Gasströmung aufweist;
b) mindestens einer Schüttung aus Katalysatormaterial, die den Innenraum des Gehäuses zumindest teilweise ausfüllt;
c) mindestens einer Temperiervorrichtung, die von der Schüttung aus Katalysatormaterial zumindest bereichsweise umgeben und von einem Wärmeträger-Medium durchströmbar ist.

Die Erfindung betrifft auch die Verwendung eines Reaktors zur Schwefelrückgewinnung aus Schwefelwasserstoff-haltigen Gas.

Reaktoren dieser Art sind in der DE-PS 37 08 957, der EP-PS 0 260 530 und der EP-PS 0 431 078 beschrieben. All diese Druckschriften beschreiben die Verwendung dieser Reaktoren am Beispiel der Schwefelrückgewinnung aus einem Schwefelwasserstoff-haltigen und zusätzlich Sauerstoff führenden oder mit Sauerstoff versetzten Gas. Ergebnis der katalytischen, und in diesem Falle exothermen Reaktion sind Falle elementarer Schwefel sowie Wasser. Die entsprechenden Reaktionsgleichungen sind der EP-PS 0 431 078 entnehmbar.

Auch der erfindungsgemäße Reaktor ist insbesondere für die Rückgewinnung elementaren Schwefels aus Schwefelwasserstoff-haltigen Gasen gedacht, jedoch auf diesen Anwendungszweck nicht beschränkt. Er eignet sich überall dort, wo von der Gasströmung mitgeführte Substanzen in einer katalytischen Reaktion, die mit einer Wärmetönung verbunden ist, also exotherm oder endoitherm abläuft, zu einem gewünschten Endprodukt umgewandelt werden sollen. Mit ihm lassen sich optimale räumliche Temperaturprofile, wie sie zur Erzeugung höchstmöglicher örtlicher Reaktionsgeschwindigkeiten und /oder zur Einstellung des gewünschten Reaktions-Gleichgewichtswertes erforderlich sind, erreichen.

Da, wie erwähnt, bei den hier interessierenden chemischen Reaktionen Wärme verbraucht (endotherm) oder frei (exotherm) wird, ist es erforderlich, mit Hilfe einer Temperiervorrichtungvorrichtung Reaktionswärme zu- oder abzuführen und die Temperatur der Katalysatorschüttung innerhalb eines bestimmten Bereiches (z.B. Temperaturfensters) zu halten. Bei exothermen katalytischen Reaktionen könnte z. B. die Überschreitung eines Maximalwertes der Temperatur verschiedene nachteilige Folgen haben: Zum einen könnten selbstverständlich die Materialien, aus denen der Reaktor besteht ebenso wie das Katalysatormaterial beschädigt werden. Darüber hinaus könnten sich sonstige mit der Gasströmung mitgeführte Substanzen in unerwünschter Weise zersetzen. Allgemein könnten sich neben den gewünschten Reaktionen (seien diese nun endotherm oder exotherm) unerwünschte konkurrierende Reaktionen einstellen und/oder das Reaktionsgleichgewicht könnte sich bei Verlassen eines bestimmten Temperaturfensters in einer bestimmten Richtung verschieben, die nicht gewollt ist.

Bei den bekannten Reaktoren der eingangs genannten Art, wie sie in den oben genannten Druckschriften im einzelnen beschrieben sind, ist die Temperiervorrichtung wegen des exothermen Verfahrensablaufs eine Kühlvorrichtung in Form einer gewickelten Rohrschlange. Derartige Kühlvorrichtungen sind jedoch außerordentlich teuer in der Herstellung, schwierig in der Wartung und dem Gehäuse des Reaktors nachträglich praktisch nicht mehr entnehmbar. Da zudem der Weg des Kühlmittels durch derartig gewickelte Schlangen sehr lange ist, ändert sich die Temperatur des Kühlmittels auf dem Weg durch die Kühlschlange stark und die Ausbildung des gewünschten Temperaturprofiles innerhalb der Katalysatorschüttung ist nur wenig präzise oder erfordert zusätzliche verteuernde Maßnahmen.

Aufgabe der vorliegenden Erfindung ist es, einen Reaktor der eingangs genannten Art so auszubilden, daß er kostengünstig herstellbar und leicht zu warten ist.

Diese Aufgabe wird erfindungsgemäß dadurch gelöst, daß
d) die Temperiervorrichtungvorrichtung von einer Vielzahl von über einen U-förmigen Bereich verbundenen Geradrohrpaaren ("U-Rohren") gebildet ist, deren geradlinige Schenkel parallel verlaufen, wobei jeweils ein Schenkel von jedem U-Rohr in einen ersten Verteilraum mündet, dem Wärmeträger-Medium zuführbar ist, und der jeweils andere Schenkel von jedem U-Rohr in einen zweiten Verteilraum mündet, aus dem das Wärmeträger-Medium abführbar ist, und (e) die Schenkel (24aa, 24ab, 24ba, 24bb) jeden U-Rohres (24) senkrecht zur Durchströmungsrichtung verlaufen.

Erfindungsgemäß besteht also die Temperiervorrichtungvorrichtung nicht mehr aus einer schwierig herzustellenden Wendel sondern aus "U-Rohren". Unter einem U-Rohr wird hier ein Gebilde verstanden, welches als Schenkel zwei gerade Rohre aufweist, die an einer Seite über einen U-förmigen Bereich miteinander verbunden sind. Die Herstellung derartiger U-Rohre außerordentlich einfach ist. Jedes dieser U-Rohre wird gesondert von Wärmeträger-Medium durchströmt, so daß der Weg, auf dem Wärme aufgenommen oder abgegeben wird, verhältnismäßig kurz und die Temperaturveränderung des Wärmeträger-Mediums bei der Durchströmung jeden einzelnen U-Rohres verhältnismäßig gering ist. Das Anschließen der einzelnen U-Rohre an den Kreislauf des Wärmeträger-Mediums ist mit den erfindungsgemäß vorgesehenen Verteilräumen sehr einfach. Bei Bedarf lassen sich einzelne U-Rohre aus der Gesamtanordnung entfernen, reparieren oder ersetzen, so daß die Wartung des erfindungsgemäßen Reaktors erheblich erleichtert ist. Durch Veränderung der Rohrteilung kann das Rohrbündel ohne Mehrkosten an unterschiedliche Wärmeübergänge innerhalb der Katalysatorschüttung angepaßt werden.

Vorzugsweise spannen die Schenkel jeden U-Rohres eine Ebene auf, die zur Durchströmungsrichtung des Gases durch den Reaktor parallel verläuft. Die beiden Schenkel jeden U-Rohres, die sich naturgemäß auf unterschiedlichen Temperaturen befinden, liegen so in Positionen des Durchströmungsweges, die unterschiedliche Temperaturen aufweisen dürfen und sollen. Auf diese Weise lassen sich Isothermen-Flächen innerhalb der Katalysatorschüttung erzielen, die im wesentlichen eben sind und senkrecht auf der Durchströmungsrichtung des Gases durch den Reaktor stehen.

Zweckmäßigerweise sind die U-Rohre auf eine Vielzahl von Ebenen verteilt, die jeweils einen Abstand voneinander aufweisen. Die U-Rohre füllen auf diese Weise den entsprechenden Bereich innerhalb der Katalysatorschüttung mit ihren Schenkeln aus. Die erzielte Kühlflächendichte kann dabei räumlich konstant oder bei Bedarf auch eine Funktion des Ortes sein.

Besonders bevorzugt wird dabei diejenige Ausgestaltung, bei welcher eine Mehrzahl von U-Rohren derart in einer Ebene angeordnet ist, daß ein äußerstes U-Rohr vorgesehen ist, dessen halbkreisförmig gebogener Bereich einen größten Radius aufweist, und bei welcher zwischen den Schenkeln und dem halbkreisförmig gebogenen Bereich dieses äußersten U-Rohres mindestens ein weiteres U-Rohr angeordnet ist, dessen halbkreisförmig gebogener Bereich einen etwas kleineren Radius aufweist, derart, daß das weitere U-Rohr parallel zum äußeren U-Rohr in derselben Ebene verläuft. Bei dieser Anordnung sind die U-Rohre, die in derselben Ebene liegen, gewissermaßen ineinander verschachtelt, was den Anschluß der beiden Schenkel, die zu den verschiedenen U-Rohren gehören, an die jeweiligen Verteilräume sehr erleichtert. Die U-Rohre innerhalb derselben Ebene müssen sich auf diese Weise nicht kreuzen.

Vorzugsweise sind die Verteilräume in einem lösbar an einem Hauptbereich des Gehäuses befestigbaren Kopfstück ausgebildet. Durch Abnehmen dieses Kopfstückes wird der Innenraum des Reaktorgehäuses zugänglich; gleichzeitig können die Verteilräume der diesen zugeordneten Aggregate bei Bedarf leicht gewartet werden.

Besonders günstig ist es in diesem Fall, wenn (auch) die U-Rohre an dem Kopfstück befestigt sind. Die U-Rohre lassen sich dann bei gelöstem Kopfstück gemeinsam mit diesem aus dem Hauptbereich des Reaktorgehäuses herausfahren und ggf. warten.

Handelt es sich um einen größeren Reaktor, so empfiehlt es sich, daß an dem Kopfstück ein Tragrahmen befestigt ist, der seinerseits im Abstand vom Kopfstück mindestens ein Gitter trägt, durch welches die Schenkel der U-Rohre derart hindurchgeführt sind, daß sie vom Gitter abgestützt sind. Die U-Rohre sind auf diese Weise nicht mehr freikragend ausschließlich direkt am Kopfstück befestigt sondern werden durch das oder die Gitter entlastet, so daß auf die Befestigungsstellen der U-Rohre keine unzulässig hohen Biegemomente ausgeübt werden.

Über dem Tragrahmen kann ein Metallgewebe liegen, das seinerseits die Schüttung aus Katalysatormaterials trägt. Auf diese Weise läßt sich gemeinsam mit dem Ausfahren der U-Rohre auch die Katalysatormaterial-Schüttung dem Gehäuse entnehmen und ggf. austauschen.

Durch die aus einer Vielzahl von U-Rohren gebildete Temperiervorrichtung läßt sich die "Hauptlast" der Tempe-g rierung bewerkstelligen. Wenn zusätzlich eine sehr genaue und rasch ansprechende Regelung der Temperierung gewünscht ist, ist eine Ausführungsform der Erfindung einsetzbar, bei welcher in der Nähe der dem Gaseinlaß benachbarten Schenkel der U-Rohre eine Mehrzahl von Gaslanzen angeordnet ist, denen Gas als zusätzliches Wärmeträgermedium oder - bei gestuften Reaktionen - zusätzliche Reagenzien zuführbar sind. Ist es zum Beispiel bei einer exothermen Reaktion erforderlich, die Katalysatorschüttung an der dem Gaseinlaß benachbarten Seite (wo erfahrungsgemäß die maximalen Temperaturen auftreten) rasch zusätzlich zu kühlen, kann über die Gaslanzen inertes, nicht an der Reaktion teilnehmendes Gas mit entsprechender Temperatur und Menge zugeführt werden. Diese Kühlung läßt sich sehr fein dosieren und wirkt schnell.

Zweckmäßig ist, wenn (auch) alle Gaslanzen mit einem Ende in einen dritten Verteilraum münden, der in dem Kopfstück ausgebildet ist.

In allen oben geschilderten Fällen erweist es sich als besonders günstig, wenn die Schenkel der U-Rohre horizontal verlaufen. Bei dieser Bauweise ist die längere Abmessung des Reaktorgehäuses horizontal ausgerichtet; über das abnehmbare Kopfstück wird dann das Innere des Gehäuses von einer Seite her zugänglich. U-Rohre und ggf. Katalysatorschüttung lassen sich in seitlicher Richtung aus dem Reaktorgehäuse herausfahren oder -schieben. Eine Hubbewegung dieser schweren Teile ist nicht erforderlich; eine besonders große Raumhöhe muß nicht vorgehalten werdenrt, um Zugang zu den Innenteilen des Reaktors zu gewinnen.

In einem Reaktor können bei Bedarf auch mehrere Temperiervorrichtungen der geschilderten Art hintereinander angeordnet sein, wobei in den einzelnen Temperiervorrichtungen durchaus auch unterschiedliche Wärmeträger-Medien verwendet werden können.

Ein Ausführungsbeispiel der Erfindung wird nachfolgend anhand der Zeichnung näher erläutert; es zeigen
- Figur 1:: einen vertikalen Schnitt durch einen Reaktor zur Schwefelrückgewinnung aus Schwefelwasserstoff-haltigem Gas;
- Figur 2:: einen Schnitt durch den Reaktor von Figur 1 gemäß Linie II-II;
- Figur 3:: einen Schnitt durch den Reaktor von Figur 1 gemäß Linie III-III.

Der in der Zeichnung dargestellte Reaktor, der insgesamt mit dem Bezugszeichen 1 gekennzeichnet ist, ist primär zur Schwefelrückgewinnung aus Schwefelwasserstoff-haltigem Gas gedacht, läßt sich aber bei praktisch unveränderter Bauweise auch zu anderen katalytischen oxidativen Reaktionen in Gasströmungen einsetzen. Da die beispielhaft gewählte Reaktion exotherm ist, wird nachfolgen statt von Temperierung von Kühlung gesprochen.

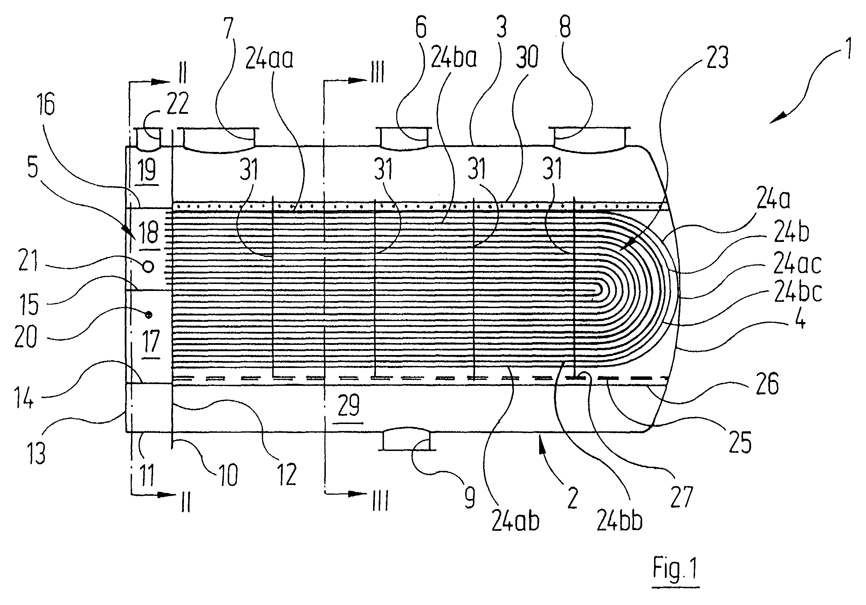

Der Reaktor 1 umfaßt ein Gehäuse 2 mit einem zylindrischen Hauptteil 3, dessen Achse horizontal ausgerichtet ist. Das zylindrische Gehäuse-Hauptteil 3 ist an der in Figur 1 rechten Stirnseite durch einen angeschweißten Klöpperboden 4 verschlossen. An die linke, offene Stirnseite des Gehäuse-Hauptteiles 3 ist ein Kopfstück 5 angesetzt, das weiter unten genauer beschrieben wird.

Das Gehäuse-Haupteil 3 weist an seiner Oberseite einen Gaseinlaß 6 für das zu behandelnde Gas sowie zwei zu Wartungszwecken bestimmte Mannlöcher 7, 8 auf. Dem Gaseinlaß 6 diametral gegenüberliegend ist an der Unterseite des Gehäuse-Hauptteiles 3 ein Gasauslaß 9 für das behandelte Gas vorgesehen.

Das Kopfstück 5 ist mit Hilfe eines Flansches 10 an der in Figur 1 linken Stirnseite des Gehäuse-Haupteiles 3 lösbar befestigt. Es umfaßt eine zylindrische Mantelfläche 11, welche mit gleichem Durchmesser das Gehäuse-Hauptteil 3 fortsetzt, eine dem Gehäuse-Hauptteil 3 benachbarte Innenwand 12 und eine ebene Außenwand 13. Drei horizontal verlaufende Zwischenbleche 14, 15, 16 teilen den Innenraum des Kopfstückes 5 in drei Verteilräume 17, 18, 19 auf. Eine Kühlmittel-Zulauföffnung 20 mündet in den unteren Verteilraum 17; eine Kühlmittel-Rücklauföffnung 21 mündet in den mittleren Verteilraum 18 und ein Sekundärgas-Einlaß 22 führt zum obersten Verteilraum 19.

An der Innenwand 12 des Kopfstückes 5 ist eine Kühlvorrichtung 23 befestigt, die aus einer Vielzahl von Geradrohrpaaren 24. die über einen U-förmigen Bereich miteinander verbunden sind und nachfolgend kurz "U-Rohre" genannt werden, besteht. Die Anordnung der U-Rohre 24 in dem Gesamtbündel ist jeweils so, daß die von ihnen gebildeten geradlinigen Schenkelpaare eine vertikale Ebene aufspannen.

Wie die Anordnung der einzelnen U-Rohre 24 innerhalb ein und derselben vertikalen Ebene ist, läßt sich anhand der Figur 1 näher erläutern. Ein erstes, äußersten U-Rohr 24a weist zwei parallele Schenkel 24aa und 24ab auf, die durch einen U-förmig gebogenen Bereich 24ac miteinander verbunden sind. Der untere Schenkel 24ab mündet in den unteren Bereich des untersten Verteilraums 17 im Kopfstück 5, während der obere Schenkel 24aa des U-Rohres 24a in den oberen Bereich des mittleren Verteilraums 18 mündet. In einem bestimmten Abstand innerhalb des äußersten U-Rohres 24a und parallel zu diesem verläuft ein weiteres U-Rohr 24b, dessen U-förmig gekrümmter Bereich 24bc einen etwas kleineren Radius aufweist als der U-förmig gekrümmte Bereich 24ac des äußeren U-Rohres 24a, derart, daß die beiden Schenkel 24ba und 24bb des U-Rohres 24b in entsprechendem Abstand unterhalb bzw. oberhalb der Schenkel 24aa und 24ab des äußersten U-Rohres 24a verlaufen. In entsprechender Weise befindet sich innerhalb des U-Rohres 24b eine Vielzahl weiterer U-Rohre 24, deren U-förmig gekrümmte Bereiche jeweils progressiv kleineren Radius aufweisen. Der Zwischenraum zwischen den äußersten Schenkeln 24aa und 24ab des äußersten Rohres 24a ist so durch eine Vielzahl von Schenkelpaaren weiterer U-Rohre 24 ausgefüllt ist, die voneinander den gleichen Abstand haben und zueinander parallel laufen. Alle unteren Schenkel dieser U-Rohre 24 münden an ihrer in Figur 1 linken Seite in den unteren Verteilraum 17, während alle oberen Schenkel der U-Rohre 24b in den oberen Verteilraum 18 münden.

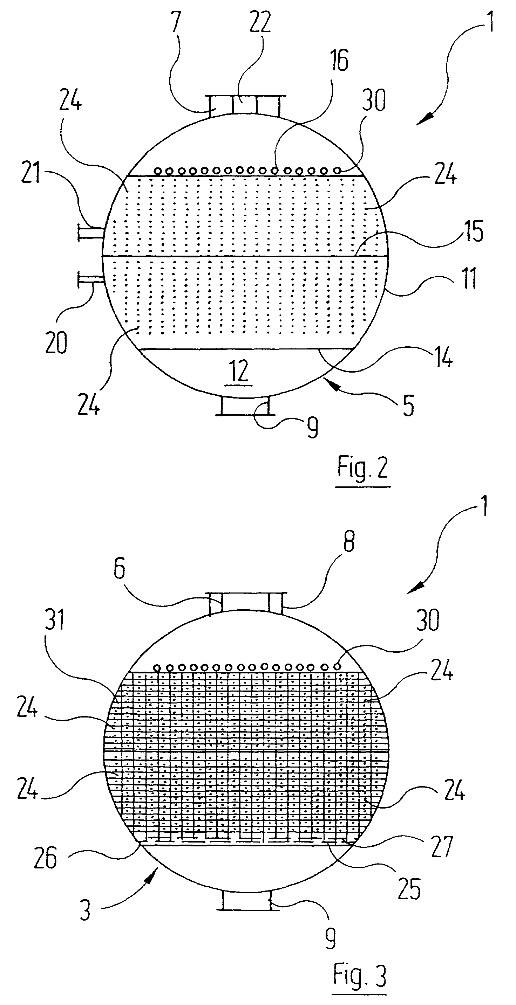

Wie insbesondere den Figuren 2 und 3 zu entnehmen ist, liegen oberhalb und unterhalb der Zeichenebene von Figur 1 in vertikalen Ebenen, die jeweils einen konstanten Abstand voneinander aufweisen, weitere Anordnungen von U-Rohren 24, die der in Figur 1 gezeigten Anordnung entsprechen.

Etwa in Höhe des untersten Zwischenbleches 14 ist an der Innenseite der Innenwand 12 des Kopfstückes 5 ein als Tragrahmen dienender Gitterrost 25 befestigt, der sich in den Innenraum des Gehäuse-Hauptteiles 3 hinein bis zum gegenüberliegenden Ende, also bis zum Klöpperboden 4 erstreckt. Der Tragrahmen 25 kann dabei an seitlichen, am Gehäuse-Hauptteil 3 befestigten Auflagen 26 abgestützt sein.

Am Tragrahmen 25 sind in unterschiedlichen Abständen von der Innenwand 12 des Kopfstückes 5 und parallel zu dieser mehrere Gitter 31 montiert, durch welche die Schenkel der U-Rohre 24 hindurchgeführt sind. Hierdurch werden die U-Rohre 24 in entsprechenden Abständen vom Kopfstück 5 abgestützt.

Der Gitterrost 25 ist durch ein Edelstahlgewebe 27 an seiner Oberseite abgedeckt. Der Raum oberhalb des Edelstahlgewebes 27 ist mit einer Schüttung aus Katalysatormaterial bis zu einer horizontalen Ebene angefüllt, die über den obersten Schenkel 24aa der äußersten U-Rohre 24a liegt. Die Maschenweite des Edelstahlgewebes 27 ist dabei so klein, daß die Schüttung nicht nach unten durchfallen kann. Der unterhalb des Gitterrostes 25 liegende Raum 28 innerhalb des Gehäuses 2, von dem der Gasauslaß 9 abzweigt, bleibt dabei leer.

Unmittelbar oberhalb der Katalysatorschüttung ist eine Vielzahl von rohrförmigen Gaslanzen 30 angeordnet, die in einer horizontalen Ebene liegen (vergleiche Figuren 2 und 3). Die Gaslanzen 30 sind an ihrem in Figur 1 rechten, dem Klöpperboden 4 benachbarten Ende gasdicht verschlossen und tragen auf ihrer Mantelfläche eine Vielzahl von Gasaustrittsöffnungen. An ihrem in Figur 1 linken Ende münden die Gaslanzen 30 in den obersten Verteilraum 16.

Die Gaslanzen 30 können außerhalb der Katalysatorschüttung oder auch noch innerhalb dieser liegen. Bevorzugt wird jedoch, daß die Gaslanzen 30 in einer über der Katalysatorschüttung angebrachten Schüttungsschicht aus inertem Füllkörpermaterial, beispielsweise aus SiO₂ oder Al₂O₃ angeordnet sind.

Die Funktion des beschriebenen Reaktors bei der Schwefel-Rückgewinnung aus Schwefelwasserstoff-haltigem Gas ist wie folgt:

Das Schwefelwasserstoff-haltige Gas wird - ggf. vorgewärmt - über den Gasseinlaß 6 von oben her in den Innenraum des Gehäuses 2 eingebracht. Dort trifft es auf die Katalysatorschüttung, wodurch sofort eine entsprechende exotherme Reaktion eingeleitet wird.

In den Verteilraum 17 des Kopfstückes 5 wird Kühlmittel, z.B. Wasser, eingeleitet. Dieses durchströmt sämtliche in der Kühlvorrichtung 23 vorgesehenen U-Rohre 24, wird im mittleren Verteilraum 18 wieder gesammelt und verläßt diesen entsprechend erwärmt über die Kühlmittelauslaßöffnung 21. Durch die so vermittelte Kühlung wird die Erwärmung der Gase und des Katalysators durch die exotherme Reaktion im oberen Bereich der Katalysatorschüttung unterhalb eines bestimmten Temperaturgrenzwertes gehalten. Die Reaktion im Gas wird durch ein Reaktionsgleichgewicht begrenzt, das durch eben diesen Temperaturwertgrenzwert bestimmt ist. Wenn nunmehr das Gas weiter in der Katalysatorschüttung nach unten vordringt, kühlt es sich weiter ab, wodurch das Gleichgewicht gestört und die Reaktion erneut in Gang gesetzt wird. Dieser Vorgang vollzieht sich gleitend, bis das Gas die gesamte Katalysatorschüttung durchquert hat, über das Edelstahlgewebe 27 in den unteren Raum 29 des Gehäuses 2 eingetreten ist und schlußendlich den Reaktor 1 über den Gasauslaß 9 verläßt.

Innerhalb des Gehäuses 2 des Reaktors 1 stellt sich dabei ein Temperaturprofil ein, welches ausgehend von der Einlaßtemperatur in der Nähe des Gaseinlasses 6 zunächst bis zu einem Maximalwert ansteigt, der in der Nähe des obersten Bereiches der Katalysatorschüttung erreicht wird; danach fällt die Temperatur nach unten im Reaktor kontinuierlich ab, wobei im allgemeinen die Auslaßtemperatur des Gases etwas höher als die Einlaßtemperatur ist. Typische Werte bei der Rückgewinnung von Schwefel aus Schwefelwasserstoff-haltigem Gas sind eine Einlaßtemperatur von 180° C, eine Maximaltemperatur von etwa 380° C sowie eine Auslaßtemperatur von 220° C. Die Einlaßtemperatur muß in jedem Falle oberhalb der Aktivierungstemperatur des Katalysators liegen. Die Maximaltemperatur darf einen Wert nicht übersteigen, bei dem die Materialien des Reaktors selbst oder im Gas mitgeführte Begleitstoffe thermisch gefährdet würden oder bei der sich konkurrierende, unerwünschte Reaktionen einstellen würden. Die Auslaßtemperatur des Gases muß im vorliegenden Falle so hoch sein, daß der Taupunkt des nunmehr elementar vorliegenden Schwefels nicht unterschritten wird, sodaß der Schwefel mit dem Gas über den Gasauslaß 9 ausgetragen und an anderer Stelle gewonnen werden kann. Grundsätzlich kann die Gewinnung des elementaren Schwefels jedoch auch im Reaktor selbst erfolgen.

Die oben bereits erwähnten Gaslanzen 30 dienen der Feinregelung der Kühlung. Hierzu wird über den Sekundärgas-Einlaß 22 in den obersten Verteilraum 19 des Kopfstückes 5 Sekundärgas eingeführt, welches über die Gaslanzen 30 in der entsprechenden Höhe in den Innenraum des Reaktorgehäuses 2 eingeblasen wird. Bei dem Sekundärgas kann es sich um Luft, um Dampf oder auch um aus dem Prozeß abgezweigtes, gereinigtes Gas handeln. Durch Menge und Temperatur des über die Gaslanzen 30 eingeblasenen Sekundärgases läßt sich mit sehr schnellem Ansprechverhalten rasch eine zusätzliche Veränderung des sich im Reaktor 1 von oben nach unten einstellenden Temperaturprofiles erzielen, die in dieser Genauigkeit und Schnelligkeit von der aus den U-Rohren 24 gebildeten Kühlvorrichtung 23 nicht geleistet werden könnte.

Die aus der Vielzahl von U-Rohren 24 gebildete Kühlvorrichtung 23 kann zu Wartungszwecken leicht zugänglich gemacht werden. Hierzu wird die Flanschverbindung 10 zwischen dem Kopfstück 5 und dem Gehäuse-Hauptteil 3 gelöst; sodann kann die gesamte Kühlvorrichtung 23 aus dem Gehäuse-Hauptteil 3 herausgefahren werden, wobei der Tragrost 25 auf den Auflagen 26 des Gehäuses 2 gleitet. Die U-Rohre 24 sowie die Katalysatorschüttung auf dem Edelstahlgewebe 27 liegen dann für die erforderlichen Arbeiten frei.

Die oben beschriebene Kühlvorrichtung 23 besteht aus U-Rohren 24 mit nur einer Umlenkung der Kühlmittelströmung.

In anderen Fällen ist aber auch eine Gestaltung mit mehreren Umlenkungen, einer entsprechenden Anzahl von U-förmig gekrümmten Bereichen und geradlinigen Schenkeln möglich.

Der oben erläuterte Reaktor 1 enthält nur eine Temperiervorrichtung 23. Die Gesamtreaktion kann jedoch auch stufenweise in mehreren hintereinandergeschalteten Temperiervorrichtungen der beschriebenen Art erfolgen, wobei das Wärmeträger-Medium nicht identisch zu sein braucht.

## Patentansprüche

1. Reaktor zur Durchführung einer katalytischen mit
einer Wärmetönung verbundenen Reaktion an Substanzen, die in einer Gasströmung enthalten sind, mit
a) einem Gehäuse, das einen Einlaß und einen Auslaß für die Gasströmung aufweist;
b) mindestens einer Schüttung aus Katalysatormaterial, die den Innenraum des Gehäuses zumindest teilweise ausfüllt;
c) mindestens einer Temperiervorrichtung, die von der Schüttung des Katalysatormaterials zumindest bereichsweise umgeben und von einem Wärmeträger-Medium durchströmbar ist,
**dadurch gekennzeichnet, daß**
d) die Temperiervorrichtung (23) von einer Vielzahl von über einen U-förmigen Bereich (24ac, 24bc) miteinander vebundenen Geradrohrpaaren ("U-Rohren") (24) gebildet ist, deren geradlinige Schenkel (24aa, 24ab, 25ba, 24bb) parallel verlaufen, wobei jeweils ein Schenkel (24ab, 24bb) von jedem U-Rohr (24) in einen ersten Verteilraum (17) mündet, dem Wärmeträger-Medium zuführbar ist, und der jeweils andere Schenkel (24aa, 24ba) von jedem U-Rohr (24) in einen zweiten Verteilraum (18) mündet, aus dem das Wärmeträger-Medium abführbar ist, und
e) die Schenkel (24aa, 24ab, 24ba, 24bb) jeden U-Rohres (24) senkrecht zur Durchströmungsrichtung verlaufen.

2. Reaktor nach Anspruch 1, **dadurch gekennzeichnet,**
**daß** die Schenkel (24aa, 24ab, 24ba, 24bb) jeden U-Rohres (24) eine parallel zur Durchströmungsrichtung verlaufende Ebene aufspannen.

3. Reaktor nach Anspruch 1 oder 2, **dadurch gekennzeichnet, daß** die U-Rohre (24) auf eine Vielzahl von Ebenen verteilt sind.

4. Reaktor nach einem der vorhergehenden Ansprüche,
**dadurch gekennzeichnet, daß** eine Mehrzahl von U-Rohren (24) derart in einer Ebene angeordnet ist, daß ein äußerstes U-Rohr (24a) vorgesehen ist, dessen U-förmig gebogener Bereich (24ac) einen größten Radius aufweist, und daß zwischen den Schenkeln (24aa, 24ab) und dem U-förmig gebogenen Bereich (24ac) dieses äußersten U-Rohres (24a) mindestens ein weiteres U-Rohr (24b) angeordnet ist, dessen U-förmiger Bereich (24bc) einen etwas kleineren Radius aufweist, derart, daß das weitere U-Rohr (24b) parallel zum äußersten U-Rohr (24) in derselben Ebene verläuft.

5. Reaktor nach einem der vorhergehenden Ansprüche,
**dadurch gekennzeichnet, daß** die Verteilräume (17, 18) in einem lösbar an einem Hauptbereich (3) des Gehäuses (2) befestigbarem Kopfstück (5) ausgebildet sind.

6. Reaktor nach Anspruch 5, **dadurch gekennzeichnet,**
**daß** die U-Rohre (24) an dem Kopfstück (5) befestigt sind.

7. Reaktor nach Anspruch 6, **dadurch gekennzeichnet,**
**daß** an dem Kopfstück (5) ein Tragrahmen (25) befestigt ist, der seinerseits im Abstand vom Kopfstück (5) mindestens ein Gitter (31) trägt, durch welches die Schenkel (24aa, 24ab, 24ba, 24bc) der U-Rohre (24) derart hindurchgeführt sind, daß sie vom Gitter (31) abgestützt sind.

8. Reaktor nach Anspruch 7, **dadurch gekennzeichnet,**
**daß** über dem Tragrahmen (25) ein Metallgewebe (27) liegt, das seinerseits die Schüttung des Katalysatormaterials trägt.

9. Reaktor nach einem der vorhergehenden Ansprüche,
**dadurch gekennzeichnet, daß** in der Nähe der dem Gaseinlaß (6) benachbarten Schenkel (24aa, 24ba) der U-Rohre (24) eine Mehrzahl von Gaslanzen (30) angeordnet ist, denen ein Gas zuführbar ist.

10. Reaktor nach Anspruch 9, **dadurch gekennzeichnet,**
**daß** alle Gaslanzen (30) mit einem Ende in einen dritten Verteilraum (19) münden, der in dem Kopfstück (5) ausgebildet ist.

11. Reaktor nach einem der vorhergehenden Ansprüche,
**dadurch gekennzeichnet, daß** die Schenkel (24aa, 24ab, 24ba, 24bb) der U-Rohre (24) horizontal verlaufen.

12. Verwendung eines Reaktors nach einem der Ansprüche 1 bis 11 zur Schwefelrückgewinnung aus Schwefelwasserstoff-haltigem Gas.

## Claims

1. A reactor for performing a catalytic reaction, associated with a thermal effect, of substances contained in a gas flow comprising:
a) a housing having an inlet and an outlet for the gas flow;
b) at least one bed of catalyst material, which at least partially fills the interior of the housing;
c) at least one temperature-regulating device, which is surrounded, at least in part, by the bed of catalyst material and can be traversed by a heat carrier medium,
wherein
d) the temperature-regulating device (23) is formed by a plurality of pairs of straight sides tubes which are connected to one another via a U-shaped section (24ac, 24bc) ("U-tubes") (24), the straight sides (24aa, 24ab, 25ba, 24bb) of the tubes extending in parallel, wherein in each case one side (24ab, 24bb) of each U-tube (24) leads into a first distribution chamber (17) that can be supplied with heat carrier medium, and in each case the other side (24aa, 24ba) of each U-tube (24) leads into a second distribution chamber (18) from which the heat carrier medium can be discharged, and
e) the sides (24aa, 24ab, 24ba, 24bb) of each U-tube (24) extend vertically to the through-flow direction.

2. A reactor as claimed in claim 1, wherein the sides (24aa, 24ab, 24ba, 24bb) of each U-tube (24) span a plane extending in parallel to the through-flow direction.

3. A reactor as claimed in claim 1 or 2, wherein the U-tubes (24) are distributed between a plurality of planes.

4. A reactor as claimed in any of the preceding claims, in which a plurality of U-tubes (24) are arranged in one plane such that an outermost U-tube (24a) is provided, whose U-shaped bent section (24ac) has a maximum radius, and that between the sides (24aa, 24ab) and the U-shaped bent section (24ac) of said outermost U-tube (24a) at least one further U-tube (24b) is arranged, whose U-shaped section (24bc) has a somewhat smaller radius, such that the further U-tube (24b) extends in parallel to the outermost U-tube (24) in the same plane.

5. A reactor as claimed in any of the preceding claims, wherein the distribution chambers (17, 18) are formed in a head piece (5) that can be detachably secured to a main part (3) of the housing (2).

6. A reactor as claimed in claim 5, wherein the U-tubes (24) are attached to the head piece (5).

7. A reactor as claimed in claim 6, wherein a support frame (25) is attached to the head piece (5), said support frame itself bearing, at a distance from the head piece (5), at least one grid (31) through which the sides (24aa, 24ab, 24ba, 24bc) of the U-tubes (24) extend such that they are supported by the grid (31).

8. A reactor as claimed in claim 7, wherein a metallic web (27) is arranged above the support frame (25), the web bearing the bed of catalyst material.

9. A reactor as claimed in any of the preceding claims, wherein a plurality of gas lances (30), to which a gas can be supplied, are arranged in the vicinity of the sides (24aa, 24ba) of the U-tubes (24) adjacent to the gas inlet (6).

10. A reactor as claimed in claim 9, wherein all the gas lances (30) lead at one end into a third distribution chamber (19) formed in the head piece (5).

11. A reactor as claimed in any of the preceding claims, wherein the sides (24aa, 24ab, 24ba, 24bb) of the U-tubes (24) extend horizontally.

12. Use of a reactor as claimed in any of claims 1 to 11 for recovering sulfur from a sulfuretted hydrogen-containing gas.

## Revendications

1. Réacteur pour effectuer une réaction catalytique, liée à une chaleur de réaction, sur des substances contenues en phase gazeuse, avec
a) un carter, présentant une admission et une évacuation pour l'écoulement gazeux ;
b) au moins une masse en vrac de matériau de catalyseur, remplissant au moins partiellement l'espace intérieur du carter ;
c) au moins un dispositif de régulation de température, entouré au moins par zones par la masse en vrac du matériau de catalyseur et susceptible d'être traversé par un milieu caloporteur,
**caractérisé en ce que**
d) le dispositif de régulation de température (23) est formé par une pluralité de paires de tubes rectilignes ("tubes en U") (24) reliés ensemble par une zone en forme de U (24ac, 24bc), paires de tubes dont les branches rectilignes (24aa, 24ab, 24ba, 24bb) s'étendent parallèlement, sachant que, respectivement, une branche (24ab, 24bb), de chaque tube en U (24), débouche dans une première enceinte de distribution (17), à laquelle un milieu caloporteur est susceptible d'être amené, et, que respectivement l'autre branche (24aa, 24ba) de chaque tube en U (24) débouche dans une deuxième enceinte de distribution (18) d'où le milieu caloporteur peut être évacué, et
e) les branches (24aa, 24ab, 24ba, 24bb) de chaque tube en U (24) s'étendent perpendiculairement à la direction de passage de l'écoulement.

2. Réacteur selon la revendication 1, **caractérisé en ce que** les branches (24aa, 24ab, 24ba, 24bb) de chaque tube en U (24) s'étendent dans un plan parallèle à la direction de passage de l'écoulement.

3. Réacteur selon la revendication 1 ou 2, **caractérisé en ce que** les tubes en U (24) sont répartis sur une pluralité de plans.

4. Réacteur selon l'une des revendications précédentes, **caractérisé en ce qu'**une pluralité de tubes en U (24) est disposée dans un plan, de manière qu'un tube en U (24a) le plus extérieur soit prévu, dont la zone (24ac), cintrée en forme de U, présente un rayon maximum, et **en ce que**, entre les branches (24aa, 24ab) et la zone (24ac), cintrée en forme de U, de ce tube en U (24a) le plus extérieur, est disposé au moins un autre tube en U (24b), dont la zone en forme de U (24bc) présente un rayon un peu plus petit, de manière que l'autre tube en U (24b) s'étende parallèlement au tube en U (24) le plus extérieur et dans le même plan.

5. Réacteur selon l'une des revendications précédentes, **caractérisé en ce que** les enceintes de distribution (17, 18) sont réalisées dans une pièce de tête (5), susceptible être fixée de façon amovible sur une zone principale (3) du carter (2).

6. Réacteur selon la revendication 5, **caractérisé en ce que** les tubes en U (24) sont fixés sur la pièce de tête (5).

7. Réacteur selon la revendication 6, **caractérisé en ce que**, sur la pièce de tête (5), est fixé un cadre support (25) portant de son côté, à distance de la pièce de tête (5), au moins une grille (31), à travers laquelle les branches (24aa, 24ab, 24ba, 24bc) des tubes en U (24) sont guidées, de manière à être soutenues par la grille (31).

8. Réacteur selon la revendication 7, **caractérisé en ce que**, au-dessus du cadre support (25), est placé un tissu métallique (27), portant de son côté la masse en vrac du matériau de catalyseur.

9. Réacteur selon l'une des revendications précédentes, **caractérisé en ce qu'**à proximité des branches (24aa, 24ba), voisines de l'admission de gaz (6), des tubes en U (24) est disposée une pluralité de lances à gaz (30) auxquelles un gaz est susceptible être amené.

10. Réacteur selon la revendication 9, **caractérisé en ce que** toutes les lances à gaz (30) débouchent, par une extrémité, dans une troisième enceinte de distribution (19), réalisée dans la pièce de tête (5).

11. Réacteur selon l'une des revendications précédentes, **caractérisé en ce que** les branches (24aa, 24ba, 24bb) des tubes en U (24) s'étendent horizontalement.

12. Utilisation d'un réacteur selon l'une des revendications 1 à 11, pour la récupération du soufre dans un gaz, contenant de l'hydrogène sulfuré.
